# FASCICULE DE BREVET EUROPEEN

(11) **EP 0 727 138 B1**
(45) Date de publication et mention de la délivrance du brevet: **11.07.2001**
(21) Numéro de dépôt: 96400304.0
(22) Date de dépôt: 14.02.1996
(51) Int. Cl.: A01J 25/00, A23C 19/09

(54) **Procédé de préparation en continu d'un fromage ou d'une spécialité fromagère, installations pour la mise en oeuvre du procédé et produit obtenu par le procédé**
Verfahren zur kontinuierlichen Herstellung von Käse oder Käsespezialitäten, Anlage zur Durchfuhrung des Verfahrens und durch das Verfahren hergestelltes Produkt
Process for the continuous preparation of a cheese or a cheese product, plants for implementing the process, and product obtained by the process

(30) Priorité: 15.02.1995 FR 9501727
(43) Date de publication de la demande: 21.08.1996
(73) Titulaire: BONGRAIN, 78280 Guyancourt (FR)
(72) Inventeur: Housset, Roger, F-89570 Neuvy Sautour (FR); Caillard, Mickael, F-89000 Auxerre (FR); Merceron, Michel, F-89800 Chablis (FR)
(74) Mandataire: Derambure, Christian

(56) Documents cités:
- EP-A- 0 358 983
- WO-A-90/14767
- WO-A-92/21230
- FR-A- 2 516 356
- US-A- 3 562 910

## Description

La présente invention concerne un procédé de fabrication en continu d'un fromage ou d'une spécialité fromagère à partir d'un caillé et/ou d'un retentat issu de l'ultrafiltration du lait selon le préambule de la revendication 1.

Elle concerne également une installation de fabrication pour la mise en oeuvre du procédé selon le préambule de la revendication 8.

Des procédés de fabrication en continu d'un fromage, ou spécialité fromagère, ont déjà été proposés par le passé.

On connaît notamment, dans le document FR-2 516 356, un procédé dans lequel les opérations d'empressurage du lait, de caillage et de moulage sont réalisées en continu. Cependant, le produit obtenu après moulage doit ensuite être égoutté pour acquérir sa texture de fromage.

Un procédé de fabrication de fromage composite de manière continue par coextrusion est également décrit dans le document EP-0 358 983. Selon ce document, on coextrude plusieurs caillés de fromage égoutté, et ceci à une température inférieure ou égale à la température ambiante.

De même, dans le document US-3 562 910, un procédé de fabrication en continu est décrit, dans lequel une masse cohérente de caillé est obtenue à partir de particules de caillé égoutté et salé.

Cependant, les opérations de brassage du caillé, d'acidification, de réglage de l'extrait sec, de salage et éventuellement d'incorporation d'ingrédients additionnels au caillé, sont réalisées de manière traditionnelle dans un broyeur et un pétrin, en amont de l'extrudeur.

La présente invention a pour but de proposer un procédé de fabrication en continu d'un fromage, ou spécialité fromagère, à partir d'un caillé et / ou d'un retentat issu de l'ultrafiltration du lait. Ce procédé permet de supprimer les opérations traditionnelles de réglage de l'extrait sec, de foisonnement, de stabilisation thermique, de texturation et de mise en forme.

Selon l'invention, le procédé de fabrication en continu d'un fromage ou spécialité fromagère est caractérisé en ce qu'il comprend les étapes suivantes:
a) introduction des matières premières comprenant au moins du caillé broyé et/ou du retentat dans un extrudeur à vis dans une première zone, comprenant deux vis sensiblement identiques s'engrenant l'une dans l'autre et entraînées en rotation dans un même sens de rotation à l'intérieur d'un fourreau allongé ;
b) transfert des matières premières de l'amont vers l'aval du fourreau, la configuration des vis et la température à l'intérieur du fourreau de l'amont vers l'aval étant adaptées pour faire subir aux matières premières successivement une étape de compression, de malaxage et de chauffage dans une deuxième zone, jusqu'à une température de 120°C environ, une étape de cisaillement et de malaxage dans une troisième zone suivie d'une étape de décompression dans une quatrième zone à une température comprise entre 55° et 120°C suivant le produit, une étape de compression, de malaxage et de chauffage dans une cinquième zone à une température comprise entre 55° et 120°C et une étape de cisaillement, de malaxage et de transfert dans une sixième zone du produit dans la filière à une température comprise entre 50° et 120°C ;
c) extrusion du produit obtenu à l'extrémité aval du fourreau à travers une filière adaptée à texturer, à mettre en forme et à refroidir le produit ; et
d) découpe du fromage, ou de la spécialité fromagère, extrudé à une longueur désirée.

Grâce à l'invention, on obtient en une seule opération un produit alimentaire du type fromage ou spécialité fromagère à partir d'un caillé broyé et/ou d'un retentat issu de l'ultrafiltration du lait.

Selon une version avantageuse de l'invention, on fourre le fromage, ou la spécialité fromagère, d'un produit de fourrage introduit par une tête de coextrusion débouchant dans la filière.

Le procédé conforme à l'invention permet donc également d'obtenir de manière continue des produits fromagers à deux composants.

Selon le procédé de l'invention, un produit alimentaire ayant le goût et la texture d'un fromage ou d'une spécialité fromagère est préparé en continu dans un extrudeur à vis chauffé entre 60°C et 120°C suivant le produit et suivi d'une filière d'extrusion, à partir de caillé broyé et/ou d'un retentat issu de l'ultrafiltration du lait.

Selon un autre aspect de l'invention, une installation de fabrication pour la mise en oeuvre du procédé conforme à l'invention, comprend un extrudeur à vis comportant deux vis sensiblement identiques s'engrenant l'une dans l'autre et entraînées en rotation dans un même sens de rotation à l'intérieur d'un fourreau allongé, un orifice d'alimentation disposé à ou vers une extrémité amont du fourreau, une filière d'extrusion située à l'extrémité aval du fourreau et un dispositif de découpe disposé à la sortie de la filière d'extrusion.

Cette installation de fabrication comprend un dispositif de dosage et d'introduction dans l'orifice d'alimentation du caillé broyé, et/ou du retentat issu de l'ultrafiltration du lait, à un débit prédéterminé, des moyens thermiques et une section non refroidie adaptés à réguler la température à l'intérieur du fourreau et de la filière d'extrusion, ledit fourreau comprenant d'amont vers l'aval une première zone d'alimentation en matières premières, une deuxième zone de compression, de malaxage et de chauffage jusqu'à une température de 120°C environ, une troisième zone de cisaillement et de malaxage, une quatrième zone de décompression, la température étant comprise entre 55° et 120°C, une cinquième zone de compression , de malaxage et de chauffage à une température entre 55° et 120°C et une sixième zone de cisaillement, de malaxage et de transfert, la configuration des vis notamment le positionnement des filets les uns par rapport aux autres, du fourreau et de la filière d'extrusion étant adaptée au profil thermique de manière à fabriquer en continu un fromage ou spécialité fromagère à partir au moins du caillé broyé, et/ou du retentat issu de l'ultrafiltration du lait, la filière d'extrusion étant adaptée à texturer, à mettre en forme à refroidir le produit.

D'autres particularités et avantages de l'invention apparaîtront encore dans la description ci-après.
Aux dessins annexés, donnés à titre d'exemples non limitatifs :
- la figure 1 illustre schématiquement en coupe un extrudeur à vis d'une installation de fabrication conforme à l'invention ;
- la figure 2a illustre une installation de fabrication conforme à un premier mode de réalisation de l'invention ;
- les figures 2b et 2c représentent un produit alimentaire obtenu à la sortie de l'installation de fabrication conforme à la figure 2a;
- la figure 3a illustre schématiquement une installation de fabrication conforme à un second mode de réalisation de l'invention ; et
- les figures 3b et 3c représentent un produit alimentaire obtenu à la sortie de l'installation de fabrication conforme à la figure 3a.

On va décrire tout d'abord une installation de fabrication pour la mise en oeuvre du procédé conforme à l'invention.

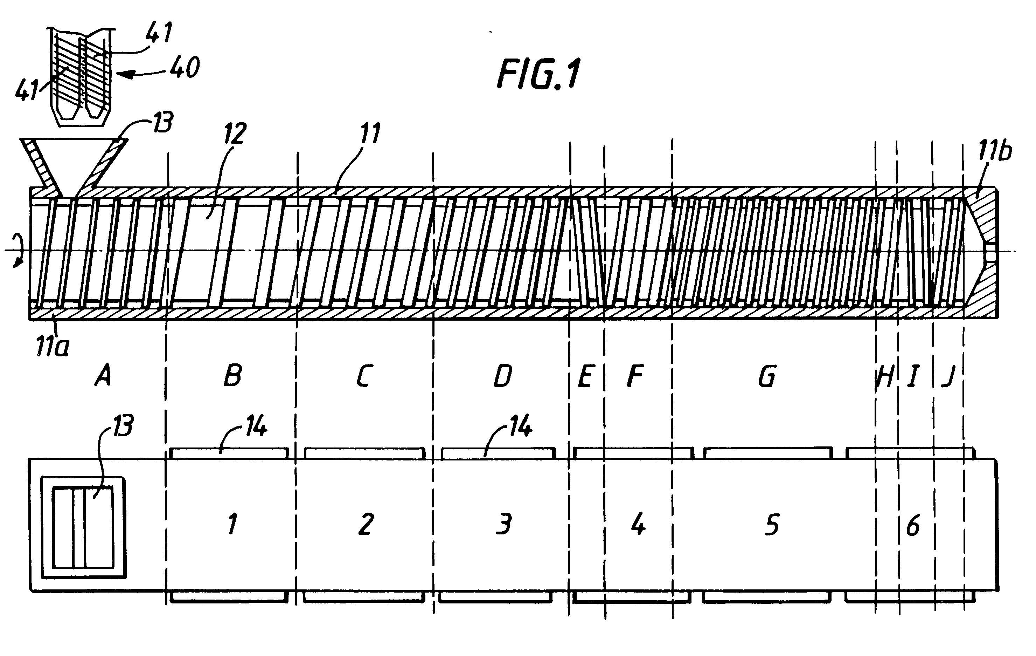

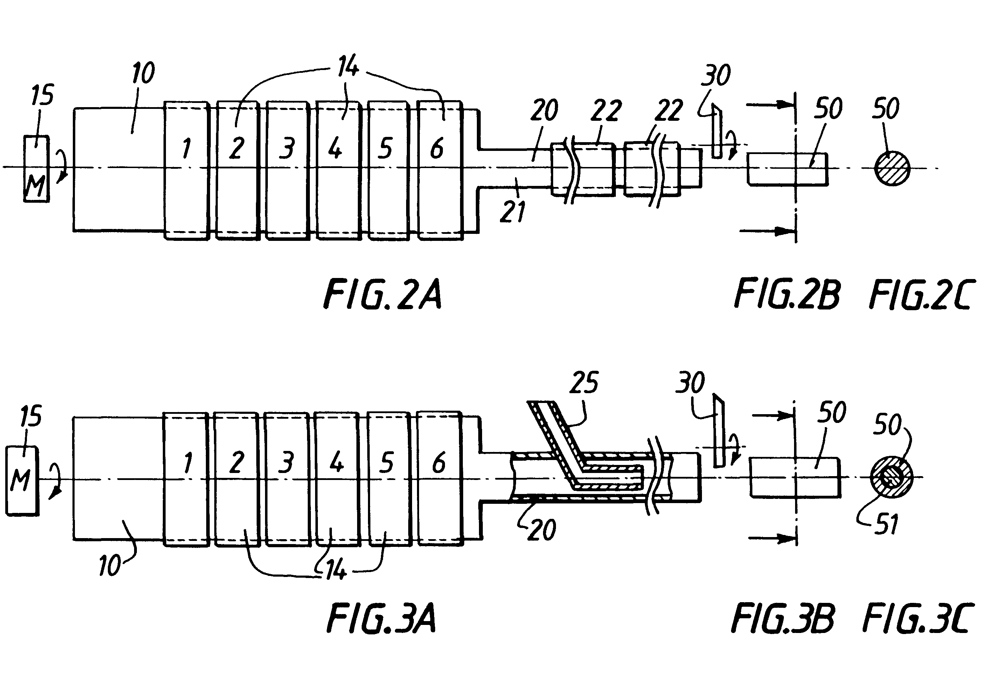

Cette installation comprend, comme illustré sur la figure 1, un extrudeur à vis 10 comportant deux vis 12 sensiblement identiques s'engrenant l'une dans l'autre et entraînées en rotation dans un même sens de rotation à l'intérieur d'un fourreau allongé 11.

L'utilisation d'un tel extrudeur à vis est bien connue pour la fabrication de snacks apéritifs, de céréales de petit déjeuner ou de farines instantanées.
Un moteur 15 permet d'entraîner en rotation les deux vis 12 imbriquées l'une dans l'autre, par l'intermédiaire, éventuellement, d'un réducteur et d'engrenages.

La puissance d'entraînement peut être égale à 25 kW par exemple.

De préférence, ces vis sont autonettoyantes et le fourreau peut être translaté manuellement dans sa direction longitudinale pour faciliter l'accès aux vis.

Bien entendu, les matériaux utilisés pour la fabrication du fourreau et des vis sont compatibles avec les aliments.

Comme illustré à la figure 1, un orifice d'alimentation 13 est disposé à ou vers une extrémité amont 11a du fourreau 11. Cet orifice d'alimentation 13 permet d'introduire les matières premières à traiter dans l'extrudeur à vis 10, c'est-à-dire notamment le caillé broyé et/ou le retentat issu de l'ultrafiltration du lait, et d'autres ingrédients.

Dans la suite du texte, la matière première considérée est notamment du caillé broyé. Il est entendu qu'il peut s'agir également d'un retentat issu de l'ultrafiltration du lait, seul ou en combinaison avec le caillé.

Le fourreau 11 peut également comporter des ouvertures (non représentées sur les figures) pour une alimentation secondaire le long du trajet des vis 12.

Une filière d'extrusion 20 est située à l'extrémité aval 11b du fourreau et un dispositif de découpe 30 est placé à la sortie de la filière d'extrusion 20.

De manière connue, cette filière d'extrusion 20 a un diamètre réduit par rapport au diamètre de l'alésage du fourreau 11, de manière à comprimer les matières transférées.

Le dispositif de découpe est de préférence un couteau rotatif 30 dont la vitesse de rotation est réglée en fonction de la longueur de produit que l'on souhaite obtenir.

Conformément à l'invention, l'installation comprend un dispositif de dosage 40 illustré à la figure 1, adapté à fournir dans l'orifice d'alimentation 13 du caillé broyé à un débit prédéterminé. Celui-ci est un doseur mono vis avec régulation pondérale spécialement conçu pour distribuer un produit humide à un débit donné. Ce débit peut influencer la texture finale du produit si l'on dépasse les possibilités de l'installation à fournir un travail mécanique suffisant.

Les deux vis 41 permettent de broyer le caillé et d'introduire ce dernier sous forme de particules à l'intérieur de l'extrudeur à vis 10.

Des moyens thermiques 14, 21 sont adaptés à régler la température à l'intérieur du fourreau 11 et de la filière d'extrusion 20, le fourreau comprenant au moins une section dans laquelle la température est comprise entre 60° et 120°C suivant le produit. Dans l'exemple de réalisation illustré sur les figures, l'extrudeur à vis 10 comporte six modules de chauffage (1,2,3,4,5,6) répartis suivant sa direction axiale longitudinale.
Une régulation fine d'environ plus ou moins 1°C permet de maintenir chaque section du fourreau 11 à une température donnée.

La configuration des vis 12 et la température à l'intérieur du fourreau 11 de la filière d'extrusion 20 sont adaptées à transformer les matières premières comprenant au moins du caillé broyé en un fromage ou spécialité fromagère.

On entend par configuration de la vis, la position des filets, leur épaisseur et leur espacement correspondant au pas de vis. La configuration de la vis, et notamment le positionnement des contre-filets, est adapté au profil thermique dans le fourreau de manière à transformer les matières premières introduites dans cet extrudeur à vis conformément au procédé tel qu'il sera décrit ci-dessous.

Comme mieux illustré à la figure 1, l'extrudeur à vis 10 comprend de l'amont vers l'aval : une première zone A d'alimentation en matières premières dans laquelle la température est égale à la température ambiante et les vis 12 ont des filets très minces à pas resserré. A titre d'exemple, l'épaisseur du filet peut être égale à 2 mm environ, le pas de vis étant égal à 25 mm environ. Cette première zone A d'alimentation peut s'étendre sur 20 cm environ. C'est à ce niveau que débouche l'orifice d'alimentation 13 en caillé broyé.

Une deuxième zone B, C, D de compression, dans laquelle la température croît de l'amont vers l'aval dans un intervalle de 15 à 120°C environ et où les vis 12 ont des filets d'épaisseur décroissante et dont le pas diminue d'une valeur large à une valeur resserrée, est adjacente à la première zone A d'alimentation.

Cette deuxième zone peut comprendre trois sections B, C, D de longueur égale chacune à 20 cm environ par exemple, dans lesquelles successivement les filets de vis ont une épaisseur de 15 mm environ et un espacement de 50 mm environ, puis une épaisseur de 10 mm environ et un espacement de 35 mm environ et une épaisseur de 7 mm environ et un espacement de 25 mm environ. La décroissance dans cette deuxième zone de l'épaisseur des filets et du pas de vis permet d'obtenir une compression progressive des matières traitées en trois étages successifs.

Parallèlement à cette configuration de la vis, un profil thermique croissant est établit à l'intérieur du fourreau 11 grâce aux trois modules chauffants 1, 2, 3 correspondants respectivement aux sections B, C, D. De préférence, la température du premier module est comprise entre 15° et 30°C suivant le produit ; et égale à 22°C dans le présent mode de réalisation. La température du second module chauffant 2 est comprise entre 55 et 65°C environ, et égale en moyenne à 60°C environ. La température du troisième module chauffant 3 est comprise entre 65 et 120°C suivant le produit, et égale à 75° dans le présent mode de réalisation.
Située directement en aval de cette deuxième zone de compression, une troisième zone E de cisaillement est prévue, dans laquelle les vis 12 ont un pas resserré inversé. Cette troisième zone E s'étend sensiblement sur 5 cm environ, les vis présentant des contre-filets d'épaisseur de 7 mm et d'un pas de 25 mm environ.

Cette troisième zone E est immédiatement suivie d'une quatrième zone F de décompression, dans laquelle la température est comprise entre 55° et 120°C suivant le produit. Les filets des vis sont de nouveau inversés par rapport à ceux de la troisième zone E de cisaillement, c'est-à-dire disposés de manière à transférer les matières premières de l'amont vers l'aval du fourreau. La température dans cette troisième zone E et cette quatrième zone F est de préférence comprise entre 55° et 120°C suivant le produit et égale à 70°C dans le présent mode de réalisation. Cette température est de préférence inférieure à celle atteinte dans la deuxième zone de compression B, C, D.

Une cinquième zone G de compression est située en aval de la quatrième zone F, dans laquelle les vis 12 ont un pas très resserré. Cette cinquième zone G s'étend de préférence sur une longueur égale à 30 cm environ. Les filets de vis ont une épaisseur égale à 7 mm environ et sont espacés de 15 mm environ.

La température dans cette cinquième zone G est régulée grâce au module chauffant 5 et est de préférence maintenue entre 55 et 120°C suivant le produit et égale à 70°C dans le présent mode de réalisation.

Enfin, l'extrémité aval des vis 12 comporte une sixième zone H, I, J de transfert dans laquelle les vis ont un pas resserré et égale à 25 mm environ. L'épaisseur des filets dans cette zone de transfert est égale à 7 mm environ.

Cette sixième zone comprend de l'amont vers l'aval une première section H, d'une longueur égale à 2,5 cm environ, puis une deuxième section I de cisaillement dans laquelle les vis 12 ont un pas inversé. Cette deuxième section I a une longueur de préférence égale à 50 mm environ et est suivie d'une troisième section J de longueur identique, dans laquelle les vis 12 ont de nouveau un pas inversé de manière à transférer le produit obtenu dans la filière d'extrusion 20.

La température dans cette sixième zone de transfert est réglée grâce au module chauffant 6 et est comprise entre 50° et 120°C suivant le produit et est égale à 70°C dans le présent mode de réalisation.

La vitesse des vis 12, entraînée par le moteur 15, est comprise entre 100 et 250 tours par minute environ, et est égale à 150 tours par minute environ dans le présent mode de réalisation. Le temps de séjour des matières traitées dans l' extrudeur à vis 20 est de l'ordre de quelques minutes seulement.

La longueur totale des vis 12 est égale ainsi à 1 375 mm environ et le fourreau a une longueur de 1 400 mm environ.

A la sortie du transporteur, le produit obtenu a une température comprise entre 60° et 120°C suivant le produit et est égale à 70°C dans le présent mode de réalisation.

Comme illustré sur la figure 2a, la filière d'extrusion 20 comprend de préférence une première section non refroidie 21 adjacente à l'extrémité aval de l'extrudeur à vis 10, et suivie d'au moins une section de refroidissement 22. Dans cette exemple de réalisation, la filière d'extrusion comporte deux sections de refroidissement 22.
Elle peut avoir typiquement une longueur de 5 m.
Ces multiples étages de refroidissement permettent d'adapter la courbe de refroidissement au comportement du produit de manière à obtenir la texture désirée en fin de filière.

La section 21 non refroidie de la filière d'extrusion 20 permet généralement de texturer le produit obtenu.

Un écart de 30°C environ est maintenu entre le fluide de refroidissement et la matière circulant dans la filière d'extrusion 20. Cette dernière est de préférence refroidie à contre-courant.

La température du produit obtenu en sortie de cette filière varie entre 20° et 30°C environ suivant la fermeté recherchée.

Le produit est ensuite découpé à la longueur désirée directement en sortie de la filière d'extrusion 20 grâce à un couteau rotatif 30.

Selon un autre mode de réalisation de l'invention, l'installation comprend, comme illustré à la figure 3a, une tête de coextrusion 25 débouchant dans la filière d'extrusion 20.

Ce dispositif de coextrusion permet ainsi de coextruder deux produits différents de manière à obtenir un produit alimentaire composite.

De préférence, la matière utilisée pour le fourrage est introduite grâce à la tête d'extrusion 25. Elle doit rester solide malgré son réchauffage dans la zone de coextrusion et doit pouvoir être introduite à froid, notamment pour refroidir l'enveloppe constituée de fromage ou spécialité fromagère extrudé. De manière générale, le comportement du produit de fourrage vis-à-vis de la température doit être proche de celui du fromage ou spécialité fromagère constituant l'enveloppe.

Une pompe (non représentée) ou une extrudeuse est associée à la tête 25 et est adaptée à délivrer un produit pâteux permet d'introduire le fourrage à un débit instantané régulier malgré des contre-pressions fortes présentes dans la filière d'extrusion. Ce débit du produit pâteux de fourrage dépend de la vitesse de sortie du fromage hors du cuiseur-extrudeur.
Grâce à l'augmentation de fermeté du produit en cours de refroidissement dans la filière 20, le produit est maintenu sous pression dans cette filière et à l'intérieur du fourreau 11. Cette pression est comprise entre 10⁴ Pa à 50 x 10⁴ Pa environ, et est égale à 6/12 X 10⁴ Pa dans le présent mode de réalisation.

On va décrire maintenant le procédé de fabrication en continu d'un fromage ou d'une spécialité fromagère à partir d'un caillé mis en oeuvre dans l'installation décrite ci-dessus. Ce procédé comprend les étapes suivantes :
a) introduction des matières premières comprenant au moins du caillé broyé dans l'extrudeur à vis 10, par l'orifice d'alimentation 13.
b) Transfert des matières premières de l'amont vers l'aval du fourreau, la configuration des vis et la température à l'intérieur du fourreau étant adaptée à transformer les matières premières par des opérations de malaxage, de texturation et de cuisson ;
c) extrusion du produit obtenu à l'extrémité aval du fourreau 11 à travers une filière 20 adaptée à texturer, à mettre en forme et à refroidir le produit ; et
d) découpe du fromage 50 ou spécialité fromagère, extrudé à une longueur désirée.

Grâce à la configuration des vis 12 et au profil thermique à l'intérieur du fourreau 11, les matières premières transférées à l'intérieur du fourreau 11 subissent successivement une étape de compression, de malaxage et de chauffage jusqu'à une température de 120°C environ, une étape de cisaillement et de malaxage suivie d'une étape de décompression à une température comprise entre 55° et 120°C suivant le produit, une étape de compression, de malaxage et de chauffage à une température comprise entre 55° et 120°C suivant le produit et une étape de cisaillement, de malaxage et de transfert du produit dans la filière à une température comprise entre 50° et 120°C suivant le produit.

Les différentes étapes précitées correspondent respectivement aux différentes zones de compression B, C, D, de cisaillement E, de détente F, de compression G et de transfert H, I, J.

Les matières premières introduites dans l'extrudeur à vis 10 sont ainsi malaxées, texturées et chauffées pour obtenir une texture du type fromage. On observe en premier lieu, dans l'installation de cuisson-extrusion, une destructuration de la matière première, puis la réalisation d'une nouvelle texture, semblable à celle du fromage, grâce aux additifs, au traitement thermique subi et aux actions mécaniques mises en oeuvre lors du transfert des matières.

Le chauffage au-delà de 70°C permet de stabiliser le produit notamment sur le plan bactériologique, par pasteurisation.

Outre le caillé, les matières premières peuvent comprendre de l'eau, du sel, des produits d'origine laitière, des produits de substitution, des agents de texturation, de coloration ou d'aromatisation, des gélifiants, des antioxydants ou des émulsifiants.

A titre d'exemple non limitatif, les produits d'origine laitière peuvent être des protéines de sérum, des caséinates, de la matière grasse laitière ou de la poudre de lait.

On entend par produit de substitution, les matières grasses d'origine végétale, les protéines végétales, l'amidon, ou la gélatine.

Des texturants tels que l'amidon ou le sel de fonte peuvent également être introduits dans les matières premières.

Eventuellement, d'autres produits tels que du jambon, des fruits secs hachés, peuvent être ajoutés au caillé afin d'aromatiser la spécialité fromagère obtenue en fin de procédé.

A titre d'exemple, on utilise comme matière de base, un caillé égoutté à 48 h et broyé ayant une proportion d'extrait sec supérieure à 38 %, par exemple 53 %, et un taux de matière grasse par rapport à l'extrait sec compris entre 28 et 62 % environ, et égal de préférence à 45 %. Le pH de ce caillé est compris entre 5,05 et 5,80 environ, et est égal à 5,20 environ de préférence. Le taux de chlorure peut être également compris entre 1 et 1,5 % environ, et égal de préférence à 1,20 % environ.

Comme il a été précisé précédemment, le caillé peut être remplacé par un combiné avec du retentat issu de l'ultrafiltration du lait.
La proportion d'extrait sec du caillé et/ou du retentat peut être, par exemple, supérieure à 38% .

Il peut être ajouté à cette matière de base des additifs pour obtenir la texture souhaitée. Par exemple, le produit final peut comprendre 2 % environ de sels de fonte, 1,5 % environ de gélatine, 2,5 % environ d'amidon, 20 % environ d'eau et 1,5 % environ de sels.

Selon une version avantageuse de l'invention, le procédé comporte en outre une étape e) d'affinage du fromage ou de la spécialité fromagère 50, obtenu à l'étape d).

Pour cela, on peut ensemencer de manière classique la surface du fromage grâce à une flore d'affinage.

En référence à la figure 3a, on peut fourrer, lors de l'étape c) d'extrusion, le fromage ou la spécialité fromagère 50 d'un produit de fourrage 51 introduit par une tête 25 de coextrusion débouchant dans la filière 20.

Le produit de fourrage est de préférence introduit à une température inférieure à 25°C environ, de manière à refroidir l'enveloppe externe en fromage ou spécialité fromagère.

Le fourrage utilisé peut être à base de fromage, d'aromates, de viande, de poisson...

On peut également, après l'étape c) d'extrusion, enrober le fromage ou la spécialité fromagère 50 d'un produit d'enrobage tel que de céréales ou autres produits solides comestibles.

On peut ainsi obtenir un produit en trois couches, composé d'un fourrage interne, d'une enveloppe en fromage ou spécialité fromagère et d'un enrobage.

Le produit alimentaire obtenu par le procédé décrit ci-dessus a le goût et la texture d'un fromage ou d'une spécialité fromagère. Comme illustré sur les figures 2b, 2c, 3b et 3c, ce produit est caractérisé par le fait qu'il est préparé en continu dans un extrudeur à vis chauffé entre 60° et 120°C suivant le produit et suivi d'une filière d'extrusion, à partir de caillé broyé et/ou de retentat. Le caillé a une proportion d'extrait sec supérieure à 38 %.
Ce produit alimentaire de type fromage a une forme correspondant à la section transversale de la filière d'extrusion 20.

Dans les exemples de la figure 2b et 2c, cette section est pleine et est de forme arrondie. Elle pourrait également être en forme de coeur, de parallélogramme ou autre.

Dans l'exemple illustré aux figures 3b et 3c, correspondant à l'utilisation d'une filière de coextrusion, le produit alimentaire a la forme d'un tube comprenant une enveloppe externe 50 constituée de fromage ou spécialité fromagère, et un fourrage interne 51.

Bien entendu, des sections transversales différentes pourraient également être réalisées en changeant la section de la filière d'extrusion 20.

De manière générale, cette section transversale du produit alimentaire est inscrite dans un cercle de diamètre compris entre quelques mm et 65 mm environ.

Le produit alimentaire a une épaisseur qui peut varier entre 1 mm et 30 cm environ. Cette épaisseur peut être modifiée dans l'exemple de réalisation illustré à la figure 2a en augmentant ou diminuant la vitesse de rotation du couteau rotatif 30.

Bien entendu, le dispositif de découpe pourrait être différent. La découpe franche obtenue par le couteau rotatif pourrait ainsi être remplacé par une coupe par pincement afin d'obtenir un produit final en forme de coussin.

Dans le cas d'un produit avec fourrage obtenu par coextrusion, cette variante permet, moyennant un traitement mécanique du produit, d'enfermer le fourrage totalement à l'intérieur du produit.

De plus, plusieurs filières de refroidissement pourraient être disposées parallèlement en sortie du fourreau à vis.
Chaque filière d'extrusion peut comporter plus de deux sections de refroidissement.

## Revendications

1. Procédé de fabrication en continu d'un fromage ou d'une spécialité fromagère à partir d'un caillé et/ou d'un retentat issu de l'ultrafiltration du lait, caractérisé en ce qu'il comprend les étapes suivantes :
a) Introduction des matières premières comprenant au moins du caillé broyé et/ou du retentat dans un extrudeur à vis (10) dans une première zone (A), comprenant deux vis (12) sensiblement identiques s'engrenant l'une dans l'autre et entraînées en rotation dans un même sens de rotation à l'intérieur d'un fourreau allongé (11) ;
b) transfert des matières premières de l'amont vers l'aval du fourreau (11), la configuration des vis (12) et la température à l'intérieur du fourreau (11) de l'amont vers l'aval étant adaptées pour faire subir aux matières premières successivement une étape de compression, de malaxage et de chauffage dans une deuxième zone (B, C, D), jusqu'à une température de 120°C environ, une étape de cisaillement et de malaxage dans une troisième zone (E), suivie d'une étape de décompression dans une quatrième zone (F), à une température comprise entre 55° et 120 °C suivant le produit, une étape de compression, de malaxage et de chauffage dans une cinquième zone (G), à une température comprise entre 55° et 120°C, et une étape de cisaillement, de malaxage et de transfert dans une sixième zone (H, I, J) du produit dans la filière (20) à une température comprise entre 50° et 120°C ;
c) extrusion du produit obtenu à l'extrémité aval (11b) du fourreau (11) à travers une filière (20) adaptée à texturer, à mettre en forme et à refroidir le produit; et
d) découpe du fromage (50), ou de la spécialité fromagère, extrudé à une longueur désirée.

2. Procédé de fabrication conforme à la revendication 1, caractérisé en ce que les matières premières comprennent en outre de l'eau et/ou du sel et/ou des produits d'origine laitière et/ou des produits de substitution et/ou des agents de texturation et/ou de coloration et/ou d'aromatisation et/ou des gélifiants et/ou des antioxydants et/ou des émulsifiants.

3. Procédé de fabrication conforme à la revendication 1 ou 2, caractérisé en ce qu'il comporte en outre une étape e) d'affinage du fromage, ou de la spécialité fromagère (50), obtenu à l'étape d).

4. Procédé de fabrication conforme à l'une des revendications 1 à 3, caractérisé en ce qu'à l'étape c), on fourre le fromage ou la spécialité fromagère (50) d'un produit de fourrage (51) introduit par une tête (25) de coextrusion débouchant dans la filière (20).

5. Procédé de fabrication conforme à la revendication 4, caractérisé en ce que ledit produit de fourrage (51) est introduit à une température inférieure à 25°C environ.

6. Procédé de fabrication conforme à l'une des revendications 1 à 5, caractérisé en ce qu'après l'étape c), le fromage, ou la spécialité fromagère (50), est enrobé d'un produit d'enrobage.

7. Procédé de fabrication conforme à la revendication 4 caractérisé en ce que l'on réalise le produit de fourrage (51) par un procédé d'extrusion.

8. Installation de fabrication pour la mise en oeuvre du procédé conforme à l'une des revendications 1 à 7, comprenant un extrudeur à vis (10) comportant deux vis (12) sensiblement identiques s'engrenant l'une dans l'autre et entraînées en rotation dans un même sens de rotation à l'intérieur d'un fourreau allongé (11), un orifice d'alimentation (13) disposé à une extrémité amont (11a) du fourreau, une filière d'extrusion (20) située à l'extrémité aval (11b) dudit fourreau et un dispositif de découpe (30) disposé à la sortie de la filière d'extrusion (20), caractérisée en ce qu'elle comprend un dispositif de dosage (40) et d'introduction dans l'orifice d'alimentation (13) du caillé broyé, et/ou du retentat issu de l'ultrafiltration du lait, à un débit prédéterminé, des moyens thermiques (14) et une section non refroidie (21) adaptés à réguler la température à l'intérieur du fourreau (11) et de la filière d'extrusion (20), ledit fourreau (11) comprenant d'amont vers l'aval une première zone (A) d'alimentation en matières premières, une deuxième zone (B, C, D) de compression, de malaxage et de chauffage jusqu'à une température de 120°C environ, une troisième zone (E) de cisaillement et de malaxage, une quatrième zone (F) de décompression, la température étant comprise entre 55° et 120°C, une cinquième zone (G) de compression, de malaxage et de chauffage à une température entre 55° et 120°C, et une sixième zone (H, I, J) de cisaillement, de malaxage et de transfert, la configuration des vis (12) notamment le positionnement des filets les uns par rapport aux autres, du fourreau (11) et de la filière d'extrusion (20) étant adaptée au profil thermique de manière à fabriquer en continu un fromage ou spécialité fromagère à partir au moins du caillé broyé, et/ou du retentat issu de l'ultrafiltration du lait, la filière d'extrusion étant adaptée à texturer, à mettre en forme et à refroidir le produit.

9. Installation conforme à la revendication 8, caractérisée en ce que:
- dans la première zone (A) d'alimentation en matières premières, la température est égale à la température ambiante et les vis (12) ont des filets très minces par rapport à la deuxième zone (B, C, D) et à pas resserré ;
- dans la deuxième zone (B, C, D) de compression, la température croît de l'amont vers l'aval dans un intervalle de 15° à 120°C et les vis (12) ont des filets d'épaisseur décroissante et le pas diminue d'une valeur large à la valeur resserrée de la première zone (A) pour obtenir une compression progressive des matières à traiter ;
- dans la troisième zone (E) de cisaillement, les vis (12) ont un pas resserré inversé par rapport à la deuxième zone (B, C, D) ;
- dans la quatrième zone (F) de décompression, la température est comprise entre 55° et 120°C ;
- dans la cinquième zone (G) de décompression, les vis (12) ont un pas très resserré par rapport à la troisième zone (E) et la température est maintenue entre 55° et 120°C ;
- dans la sixième zone (H, I, J) de transfert, les vis (12) ont un pas resserré par rapport à la cinquième zone (G) et la sixième zone (H, I, J) comprenant au moins une section (I) de cisaillement dans laquelle les vis (12) ont un pas inversé par rapport aux sections (H, J).

10. Installation conforme à l'une des revendications 8 ou 9, caractérisée en ce que ledit dispositif de dosage du caillé (40) est un doseur pondéral à deux vis.

11. Installation conforme à l'une des revendications 8 à 10, caractérisée en ce que la filière d'extrusion (20) comprend une première section non refroidie (21), adjacente à l'extrémité aval de l'extrudeur à vis (10), suivie d'au moins une section de refroidissement (22).

12. Installation conforme à l'une des revendications 8 à 11, caractérisée en ce qu'une tête de coextrusion (25) débouche dans la filière d'extrusion (20).

13. Installation conforme à la revendication 12, caractérisée en ce qu'à la tête de coextrusion (25) est associée une extrudeuse.

## Patentansprüche

1. Kontinuierliches Herstellungsverfahren eines Käses oder einer Käsespezialität ausgehend von einer Sauermilch und/oder einem Retentat aus der Ultrafiltration von Milch, dadurch gekennzeichnet, dass es aus folgenden Etappen besteht:
a) Einführung der Rohstoffe mit mindestens gemahlener Sauermilch und/oder einem Retentat in eine Schneckenstrangpresse (10) in eine erste Zone (A) mit zwei etwa identischen, ineinander greifenden Schnecken (12), die innerhalb einer länglichen Hülse (11) in einer gleichen Rotationsrichtung rotationsangetrieben werden;
b) Transfer der Rohstoffe von vorne bis hinten durch die Hülse (11), wobei die Konfiguration der Schnecken (12) und die Temperatur innerhalb der Hülse (11) von vorne bis hinten so beschaffen sind, dass die Rohstoffe nacheinander in einer zweiten Zone (B, C, D) einer Kompressions-, Knet- und Heizetappe unterzogen werden, bis sie eine Temperatur von etwa 120°C erreicht haben, dann einer Abscher- und Knetetappe in einer dritten Zone (E), gefolgt von einer Dekompressionsetappe in einer vierten Zone (F) bei einer Temperatur von je nach Produkt 55° bis 120°C, einer Kompressions-, Knet- und Heizetappe in einer fünften Zone (G) bei einer Temperatur von 55° bis 120°C, und einer Abscher-, Knet- und Transferetappe in einer sechsten Zone (H, I, J) des Produkts im Spritzmundstück (20) bei einer Temperatur von 50° bis 120°C;
c) Extrusion des am nachgelagerten Ende (11b) der Hülse (11) erhaltenden Produkts durch ein Spritzmundstück (20), das geeignet ist, das Produkt zu texturieren, zu formen und abzukühlen; und
d) Zuschneiden des stranggepressten Käses (50) oder der Käsespezialität auf eine gewünschte Länge.

2. Herstellungsverfahren nach Anspruch 1, dadurch gekennzeichnet, dass die Rohstoffe des weiteren Wasser und/oder Salz und/oder Milchprodukte und/oder Ersatzprodukte und/oder Texturierungsmittel und/oder Farbstoffe und/oder Geschmackstoffe und/oder Gelierstoffe und/oder Oxidationsinhibitoren und/oder Emulgatoren enthalten.

3. Herstellungsverfahren nach Anspruch 1 oder 2, dadurch gekennzeichnet, dass es des weiteren nach der Etappe d) eine Reifungsetappe e) des Käses oder der Käsespezialität (50) umfasst.

4. Herstellungsverfahren nach einem der Ansprüche 1 bis 3, dadurch gekennzeichnet, dass man bei der Etappe c) den Käse oder die Käsespezialität (50) mit einem Füllprodukt (51) füllt, das von einem in das Spritzmundstück (20) mündendem Koextrusionskopf (25) eingeführt wird.

5. Herstellungsverfahren nach Anspruch 4, dadurch gekennzeichnet, dass das besagte Füllprodukt (51) bei einer Temperatur von weniger als etwa 25°C eingeführt wird.

6. Herstellungsverfahren nach einem der Ansprüche 1 bis 5, dadurch gekennzeichnet, dass der Käse oder die Käsespezialität (50) nach der Etappe c) mit einem Ummantelungsprodukt ummantelt wird.

7. Herstellungsverfahren nach Anspruch 4, dadurch gekennzeichnet, dass das Füllprodukt (51) nach einem Strangpressverfahren hergestellt wird.

8. Herstellungsanlage für die Umsetzung des Verfahrens nach einem der Ansprüche 1 bis 7, mit einer Schneckenstrangpresse (10) mit zwei etwa identischen ineinander greifenden Schnecken (12), die innerhalb einer länglichen Hülse (11) in einer gleichen Rotationsrichtung rotationsangetrieben werden, einer an einem vorgelagerten Ende (11a) der Hülse angeordneten Beschickungsöffnung (13), einem am nachgelagerten Ende (11b) der besagten Hülse angeordneten Spritzmundstück (20) und einer am Ausgang des Spritzmundstücks (20) angeordneten Zuschneidvorrichtung (30), dadurch gekennzeichnet, dass sie eine Dosier- und Einführvorrichtung (40) in die Beschickungsöffnung (13) der gemahlenen Sauermilch und/oder des aus der Ultrafilterung der Milch kommenden Retentats mit einem vorbestimmten Durchsatz umfasst, sowie thermische Mittel (14) und einen nicht gekühlten Abschnitt (21), um die Temperatur innerhalb der Hülse (11) und des Spritzmundstücks (20) zu regeln, wobei die besagte Hülse (11) von vorne nach hinten eine erste Rohstoff-Beschickungszone (A), eine zweite Kompressions-, Knet- und Heizzone (B, C, D) bis zu einer Temperatur von etwa 120°C, eine dritte Abscher- und Knetzone (E), eine vierte Dekompressionszone (F), wobei die Temperatur zwischen 55° bis 120°C beträgt, eine fünfte Kompressions-, Knet- und Heizzone (G) auf eine Temperatur zwischen 55° und 120°C, und eine sechste Abscher-, Knet- und Transferzone (H, I, J) aufweist, wobei die Konfiguration der Schnecken (12), insbesondere die Positionierung des einen Gewindes in Bezug auf das andere, der Hülse (11) und des Spritzmundstücks (20) dem Wärmeprofil so angepasst ist, um kontinuierlich einen Käse oder eine Käsespezialität ausgehend von einer gemahlenen Sauermilch und/oder des aus der Ultrafilterung der Milch kommenden Retentats herzustellen, wobei das Spritzmundstück geeignet ist, das Produkt zu texturieren, zu formen und abzukühlen.

9. Anlage nach Anspruch 8, dadurch gekennzeichnet, dass:
- die Temperatur in der ersten Rohstoff-Beschickungszone (A) der Raumtemperatur entspricht und dass die Schnecken (12) in Bezug auf die zweite Zone (B, C, D) sehr dünne Gewinde mit enger Steigung aufweisen;
- die Temperatur in der zweiten Kompressionszone (B, C, D) von vorne nach hinten in einem Intervall von 15° bis 120°C ansteigt und dass die Schnecken (12) Gewinde mit abnehmender Dicke aufweisen und die Steigung von einem breiten Wert auf den engen Wert der ersten Zone (A) abnimmt, um eine progressive Kompression der zu verarbeitenden Stoffe zu erhalten;
- die Schnecken (12) in der dritten Abscherzone (E) eine zur zweiten Zone (B, C, D) umgekehrte enge Steigung aufweisen;
- die Temperatur in der vierten Dekompressionszone (F) zwischen 55° und 120°C beträgt;
- die Schnecken (12) in der fünften Zone (G) eine in Bezug auf die dritte Zone (E) sehr enge Steigung aufweisen und dass die Temperatur zwischen 55° und 120°C gehalten wird;
- die Schnecken (12) in der sechsten Transferzone (H, I, J) eine in Bezug auf die fünfte Zone (G) und die sechste Zone (H, I, J) enge Steigung und mindestens einen Abscherabschnitt (I) aufweisen, in dem die Schnecken (12) eine zu den Abschnitten (H, J) umgekehrte Steigung haben.

10. Anlage nach einem der Ansprüche 8 oder 9, dadurch gekennzeichnet, dass die besagte Sauermilch-Dosiervorrichtung (40) ein Zweischnecken-Gewichtsdosierer ist.

11. Anlage nach einem der Ansprüche 8 bis 10, dadurch gekennzeichnet, dass das Spritzmundstück (20) einen ersten ungekühlten Abschnitt (21) aufweist, der an das nachgelagerte Ende der Schneckenstrangpresse (10) angrenzt und an dem sich mindestens ein Kühlabschnitt (12) anschließt.

12. Anlage nach einem der Ansprüche 8 bis 11, dadurch gekennzeichnet, dass ein Koextrusionskopf (25) in das Spritzmundstück (20) mündet.

13. Anlage nach Anspruch 12, dadurch gekennzeichnet, dass der Koextrusionskopf (25) einer Strangspresse zugeordnet ist.

## Claims

1. A method for continuously manufacturing cheese or a cheese speciality from curd and/or a residue issuing from the ultrafiltration of milk, characterised in that it comprises the following steps:
a) introduction of the raw materials comprising at least broken curd and/or residue into a screw-type extruder (10) in a first zone (A), comprising two substantially identical screws (12) engaging with one another and driven rotationally in the same direction of rotation inside an elongated sleeve (11);
b) transfer of the raw materials from upstream to downstream of the sleeve (11), the configuration of the screws. (12) and the temperature inside the sleeve (11) from upstream to downstream being adapted to submit the raw materials successively to a step of compression, mixing and heating in a second zone (B, C, D), up to a temperature of around 120°C, a step of shearing and mixing in a third zone (E), followed by a step of decompression in a fourth zone (F), at a temperature between 55°C and 120°C depending on the product, a step of compression, mixing and heating in a fifth zone (G), at a temperature between 55°C and 120°C, and a step of shearing, mixing and transfer in a sixth zone (H, I, J) of the product into the extrusion die (20) at a temperature between 50°C and 120°C;
c) extrusion of the product obtained at the downstream end (11b) of the sleeve (11) through an extrusion die (20) adapted to texture, shape and cool the product; and
d) cutting of the extruded cheese (50), or cheese speciality, to a desired length.

2. A manufacturing method according to Claim 1, characterised in that the raw materials also comprise water and/or salt and/or dairy products and/or substitutes and/or texturing agents and/or colourings and/or flavourings and/or gelling agents and/or antioxidants and/or emulsifiers.

3. A manufacturing method according to Claim 1 or 2, characterised in that it further includes a step e) of refining the cheese or cheese speciality (50) obtained at step d).

4. A manufacturing method according to one of Claims 1 to 3, characterised in that, at step c), the cheese or cheese speciality (50) is stuffed with a stuffing product (51) introduced through a co-extrusion head (25) opening into the extrusion die (20).

5. A manufacturing method according to Claim 4, characterised in that said stuffing product (51) is introduced at a temperature less than around 25°C.

6. A manufacturing method according to one of Claims 1 to 5, characterised in that, after step c), the cheese, or the cheese speciality (50), is coated with a coating product.

7. A manufacturing method according to Claim 4, characterised in that the stuffing product (51) is produced by an extrusion method.

8. A manufacturing installation for implementing the method according to one of Claims 1 to 7, comprising a screw-type extruder (10) having two substantially identical screws (12) engaging in one another and driven rotationally in the same direction of rotation inside an elongated sleeve (11), an input aperture (13) disposed at an upstream end (11a) of the sleeve, an extrusion die (20) situated at the downstream end (11b) of said sleeve and a cutting device (30) disposed at the output of the extrusion die (20), characterised in that it comprises a device for measuring out (40) and introducing, into the input aperture (13), broken curd, and/or residue issuing from the ultrafiltration of milk, at a predetermined rate, thermal means (14) and a non-cooled section (21) adapted to regulate the temperature inside the sleeve (11) and the extrusion die (20), said sleeve (11) comprising from upstream to downstream a first zone (A) for input of raw materials, a second zone (B, C, D) for compression, mixing and heating to a temperature of around 120°C, a third zone (E) for shearing and mixing, a fourth zone (F) for decompression, the temperature being between 55°C and 120°C, a fifth zone (G) for compression, mixing and heating to a temperature between 55°C and 120°C, and a sixth zone (H, I, J) for shearing, mixing and transfer, the configuration of the screws (12), notably the positioning of the threads with respect to one another, of the sleeve (11) and of the extrusion die (20) being adapted to the thermal profile so as to continuously manufacture a cheese or cheese speciality from at least broken curd, and/or residue issuing from the ultrafiltration of milk, the extrusion die being adapted to texture, shape and cool the product.

9. An installation according to Claim 8, characterised in that:
- in the first zone (A) for input of raw materials, the temperature is equal to the ambient temperature and the screws (12) have threads which are very thin compared to the second zone (B, C, D) and at a narrow pitch;
- in the second zone (B, C, D) for compression, the temperature increases from upstream to downstream in a range from 15°C to 120°C and the screws (12) have threads of decreasing thickness and the pitch decreases from a wide value to the narrow value of the first zone (A) in order to obtain a progressive compression of the materials to be processed;
- in the third zone (E) for shearing, the screws (12) have a narrow pitch, reversed compared to the second zone (B, C, D);
- in the fourth zone (F) for decompression, the temperature is between 55°C and 120°C;
- in the fifth zone (G) for decompression, the screws (12) have a very narrow pitch compared to the third zone (E) and the temperature is maintained between 55°C to 120°C;
- in the sixth zone (H, I, J) for transfer, the screws (12) have a narrow pitch compared to the fifth zone (G) and the sixth zone (H, I, J) comprising at least one section (I) for shearing in which the screws (12) have an pitch which is reversed compared to the sections (H, J).

10. An installation according to either of Claims 8 or 9, characterised in that said device for measuring out the curd (40) is a twin-screw gravimetric measuring feeder.

11. An installation according to one of Claims 8 to 10, characterised in that the extrusion die (20) comprises a first non-cooled section (21), adjacent to the downstream end of the screw-type extruder (10), followed by at least one cooling section (22).

12. An installation according to one of Claims 8 to 11, characterised in that a co-extrusion head (25) opens into the extrusion die (20).

13. An installation according to Claim 12, characterised in that an extruder is associated with the co-extrusion head (25).
